# EUROPEAN PATENT APPLICATION

(11) **EP 4 407 733 A1**
(43) Date of publication of application: **31.07.2024**
(21) Application number: 22872266.6
(22) Date of filing: 16.09.2022
(51) Int. Cl.: H01M 10/054, H01M 4/46, H01M 4/583

(54) **RECHARGEABLE BIPOLAR ALUMINIUM-ION BATTERY AND ASSOCIATED USES**

(30) Priority: 23.09.2021 ES 202130893
(71) Applicant: Albufera Energy Storage, S.L., 28001 Madrid (ES)
(72) Inventor: CHACÓN GUADALIX, Joaquín José, 28001 Madrid (ES); DOMÍNGUEZ GONZÁLEZ, Cristina, 28001 Madrid (ES); ALMODÓVAR LOSADA, Paloma, 28001 Madrid (ES)
(74) Representative: Serrano Irurzun, Javier
(86) International application number: PCT/ES2022/070588
(87) International publication number: WO 2023/047004

(57) **Abstract**

The present invention relates to a rechargeable bipolar aluminium-ion battery and its associated uses. Said battery is capable of producing a voltage up to 200 % higher than that of conventional rechargeable aluminium-ion batteries thanks to the type of materials selected for the electrodes and the "sandwich" type stacking of the electrochemical cells that make it up through the use of graphite current collectors shared between adjacent cells. This configuration effectively reduces internal resistance achieving higher power density and a greater number of charge and discharge cycles without rapid deterioration of the energy storage capacity of the battery.

## Description

### FIELD OF THE INVENTION

The present invention falls within the field of electrical energy storage technologies. More specifically, the object of the invention refers to a rechargeable bipolar aluminium-ion battery and its associated uses.

### BACKGROUND OF THE INVENTION

Sustainable production and efficient storage of electrical energy are urgent needs of modern society to mitigate pressing global challenges; that is, equal access to energy, environmental degradation and climate change. Technologies based on renewable energy sources show enormous potential as a solution to these energy and environmental problems. However, the electricity they generate is intermittent and, until now, storage has not been achieved in a practical, easy and economical way. It is thus of vital importance to improve current electrical energy storage systems to guarantee both the maximum use of each green megawatt generated, and a stable and continuous delivery of electricity to the grid systems.

Within electrical energy storage systems, there are batteries. Batteries are devices that consist of several electrochemical cells connected in series or parallel capable of producing electric current from the chemical reactions that occur inside them. If said reactions are reversible, the batteries are called rechargeable batteries or secondary batteries.

To date, rechargeable lithium-ion batteries have been the most commercialised worldwide, being used as a power supply for portable electronic devices and hybrid and electric vehicles due to their high energy capacity and resistance to discharge. However, the high cost associated with their manufacturing, their flammability risks, as well as the limited reserves of this metal in the Earth's crust have triggered the search for alternative storage systems for large-scale applications [Larcher et al. Nature Chemistry, 2015, 7 (1), 19-29].

Currently, rechargeable aluminium-ion batteries stand as one of the most promising and safest alternatives for large-scale electrical energy storage due to their low cost, low flammability and high storage capacity (8040 mAh cm⁻³, four times higher than a lithium one). However, despite their indisputable advantages, the commercial development of this type of battery has been limited; mainly due to its low power density (less than 250 W kg⁻¹) and an insufficient number of charge and discharge cycles (less than 100 cycles) with a rapid deterioration of its energy storage capacity (between 26 % and 85 % in 100 cycles) [see, for example, Jayaprakash et al. Chemical Communications, 2011, 47 (47), 12610-12612; Rani et al. Journal of The Electrochemical Society, 2013, 160 (10), A1781; Hudak et al. J. Phys. Chem. C, 2014, 118, 5203-5215].

Recently, several rechargeable aluminium-ion batteries have been developed that attempt to solve the aforementioned limitations. The first of them consists of a "Swagelok" or "pouch" type electrochemical cell with a sheet of pure aluminium as the anode, a sheet of pyrolytic graphite (-17 µm thick) or three-dimensional graphite foam as the cathode, and a solution of aluminium chloride (AlCl₃) in 1-ethyl-3-methylimidazolium chloride as electrolyte. Said cell provides charging times of around one minute with a power density of 3000 W kg⁻¹, and supports more than 7500 charging/discharging cycles without deterioration of its storage capacity (70 mA hg⁻¹, approx.) [Lin et al. Nature, 2015, 520 (7547), 324-328]. The second, also with a pure aluminium anode and a graphite cathode, but using an AlCl₃/urea solution as electrolyte, has a specific capacity of 93 mA hg⁻¹ at 100 mA g⁻¹, and 75 mA hg⁻¹ at 200 mA g⁻¹ after 500 cycles, no further deterioration of its capacity being observed even at 1000 mA g⁻¹ [Jiao et al. ChemComm, 2017, 53 (15), 2331-2334]. However, none of these battery models exceed 2.2-2.5 V as maximum operating voltage.

The present invention proposes a solution to the aforementioned limitations, through a novel rechargeable bipolar aluminium-ion battery with improved efficiency compared to known rechargeable aluminium-ion batteries.

### BRIEF DESCRIPTION OF THE INVENTION

In light of the problems of the state of the art set forth in the previous section, the object of the present invention refers to a rechargeable bipolar aluminium-ion battery and its associated uses. Said battery is capable of producing a voltage up to 200 % higher than that of conventional aluminium-ion rechargeable batteries thanks to the type of materials selected for the electrodes and the "sandwich" type stacking of the electrochemical cells that make it up (instead of the conventional series structure) by using graphite current collectors shared between adjacent cells. This configuration effectively reduces internal resistance achieving higher power density and a greater number of charge and discharge cycles without rapid deterioration of the energy storage capacity of the battery.

In the scope of interpretation of the present invention, "electrochemical cell" will be understood as an energy storage device capable of obtaining electrical energy from redox reactions that take place within it and that consists of two electrodes, one positive and another negative, separated by a porous membrane or sheet that prevents short circuits between said electrodes, and "battery" is the set of two or more electrochemical cells connected to each other. Likewise, "rechargeable battery" will be understood as a battery in which the redox reactions are reversible and which, thus, allows various charge and discharge cycles; that is, providing a stable and controlled electric current to an external load by depleting the materials of the electrochemical cells that compose it ("discharge") and being recharged again by means of an external energy source to regenerate the consumed materials ("charge").

Likewise, in the present invention, "oxidation reaction" is understood as a chemical reaction in which electrons are transferred, and "reduction reaction" is understood as that in which electrons are captured.

Thus, the battery object of the present invention comprises:
- a plurality of electrochemical cells stacked in series, each of which in turn comprises:
   - a first electrode, comprising an aluminium sheet that undergoes an oxidation reaction during battery discharging, and a reduction reaction during battery charging;
   - a second electrode, comprising a carbonaceous material that undergoes a reduction reaction during battery discharging and an oxidation reaction during battery charging; and,
   - a separation membrane, arranged as a mechanical spacer between the first and second electrodes but allowing ionic exchange between said electrodes;
- an electrolyte, in which the plurality of electrochemical cells are submerged and which transports the ions released in the first electrode and in the second electrode during the charge and discharge cycles of the battery;
- a first current collector, comprising a graphite sheet arranged in contact with the first electrode of a cell arranged at a first end of the series of electrochemical cells;
- a second current collector, comprising a graphite sheet arranged in contact with the second electrode of a cell arranged at a second end of the series of electrochemical cells; and,
- a housing that houses the plurality of electrochemical cells, the electrolyte, the first current collector and the second current collector.

Advantageously, in the plurality of stacked electrochemical cells that make up the battery, the consecutive cells are connected by a graphite sheet arranged between said consecutive cells.

In a preferred embodiment of the invention, the thickness of the graphite sheet is between 0.1 and 10 mm.

In a preferred embodiment of the invention, the first electrode comprises a sheet of pure aluminium. Alternatively, the first electrode comprises a sheet of an aluminium alloy; preferably, an alloy of aluminium and magnesium, aluminium and zinc, aluminium and tin, or aluminium and gallium and, more preferably, with a weight percentage of magnesium, zinc, tin or gallium of less than 5 %.

In a preferred embodiment of the invention, the first electrode comprises a hydrophobic and/or anticorrosive coating.

In a preferred embodiment of the invention, the second electrode comprises one or more of the following carbonaceous materials: amorphous carbon, graphite, expanded graphite, graphene, graphene oxide, reduced graphene oxide, or expanded graphite or graphene doped with hydrogen, sulphur, nitrogen or potassium.

In a preferred embodiment of the invention, the second electrode is deposited in the form of paint on the graphite sheet by means of a binder additive. Preferably, the binder additive comprises polyvinylidene fluoride (PVDF), polytetrafluoroethylene (PTFE), sodium alginate, carboxymethyl cellulose (CMC) or styrene-butadiene rubber (SBR). More preferably, the weight ratio between the binder additive and the carbonaceous material is equal to or less than 15 %. This carbon-carbon bond between the electrode and the graphite sheet allows the internal resistance of the cell to be reduced and the conductivity to be increased, by eliminating the interface that is created in conventional batteries by depositing the active material of the electrode on a substrate of a different material; for example, lithium-ion or aluminium-ion batteries where the carbonaceous active material of the electrodes is deposited on copper sheets (see, for example, Lahiri et al. J. Mater. Chem., 2011, 21(35), 13621-13626, y CN109354008A). Accordingly, the power and voltage density of the battery is increased. Likewise, the deposition of the active material of the electrode in the form of paint favours this reduction of the internal resistance of the cell since it provides better adhesion between the carbonaceous material of the electrode and the graphite sheet.

In a preferred embodiment of the invention, the second electrode of the cell arranged at the second end of the series of electrochemical cells is deposited in the form of paint on the graphite sheet of the second current collector by means of a binder additive. Preferably, the binder additive comprises polyvinylidene fluoride (PVDF), polytetrafluoroethylene (PTFE), sodium alginate, carboxymethyl cellulose (CMC) or styrene-butadiene rubber (SBR). More preferably, the weight ratio between the binder additive and the carbonaceous material is equal to or less than 15%. As in the previous embodiment, this configuration makes it possible to reduce the internal resistance of the cell and, accordingly, improve the conductivity, power density and voltage of the battery.

In a preferred embodiment of the invention, the electrolyte comprises a solution of an aluminium halogenide in an ionic liquid. Preferably, the aluminium halogenide comprises aluminium chloride, aluminium bromide or aluminium iodide, while the ionic liquid comprises urea, acetamide, 1-ethyl-3-methylimidazolium chloride, 1-ethyl-3-methylimidazolium bromide or 1-ethyl-3-methylimidazolium iodide. More preferably, the weight ratio between the aluminium halogenide and the ionic liquid is comprised between 1:1 and 3:1.

In a preferred embodiment of the invention, the separation membrane comprises a porous sheet of ceramic materials, glass microfibres, polypropylene or any possible combination thereof.

In a preferred embodiment of the invention, the housing comprises polytetrafluoroethylene (PTFE), polyvinyl chloride (PVC), polyethylene terephthalate (PET).

The use of a battery according to any of the configurations previously described as a button, cylindrical or prismatic battery for stationary applications or as an energy accumulator for electric or hybrid vehicles is also the object of the present invention.

### DESCRIPTION OF THE FIGURES

Figure 1 shows a diagram of the elements that make up the electrochemical battery that is the object of the present invention during charging thereof, according to a preferred embodiment thereof.
Figure 2 shows the galvanostatic charge (a) and discharge (b) curves of the bipolar battery object of the present invention according to a preferred embodiment thereof under a current density of 50 mA g⁻¹.
Figure 3 shows the long-term cyclic performance of the bipolar battery object of the present invention, according to a preferred embodiment thereof, over 150 galvanostatic charge/discharge cycles at 50 mA g⁻¹. Curves a and b represent the specific capacity of the battery in the state of charge and discharge, respectively, and curve c, the Coulombic efficiency thereof. The inner graph shows the stability of the specific capacity of said battery over more than 6000 charge/discharge cycles.

### NUMERICAL REFERENCES USED IN THE FIGURES

In order to help a better understanding of the technical characteristics of the invention, the aforementioned figures are accompanied by a series of numerical references where, for illustrative and non-limiting purposes, the following is represented:

| | |
|---|---|
| (1) | Plurality of electrochemical cells |
| (1') | Cell arranged at the first end of the series of electrochemical cells |
| (1") | Cell arranged at a second end of the series of electrochemical cells |
| (2) | First electrode |
| (3) | Second electrode |
| (4) | Separation membrane |
| (5) | Electrolyte |
| (6) | First current collector |
| (7) | Second current collector |
| (8) | Housing |
| (9) | Graphite sheet |

### DETAILED DESCRIPTION OF THE INVENTION

As described in previous sections, the rechargeable bipolar aluminium-ion battery object of the present invention comprises:
- a plurality of electrochemical cells (1) stacked in series, each of them composed of a first electrode (2) of aluminium, a second electrode (3) of carbonaceous material and a separation membrane (4);
- an electrolyte (5), in which the plurality of electrochemical cells (1) are submerged and which transports the ions released in the first electrode (2) and in the second electrode (3) during the charge and discharge cycles of the battery;
- a first current collector (6), comprising a graphite sheet arranged in contact with the first electrode (2) of a cell (1') arranged at a first end of the series of electrochemical cells (1);
- a second current collector (7), comprising a graphite sheet arranged in contact with the second electrode (3) of a cell (1") arranged at a second end of the series of electrochemical cells (1); and,
- a housing (8) that houses the plurality of electrochemical cells (1), the electrolyte (5), the first current collector (6) and the second current collector (7).

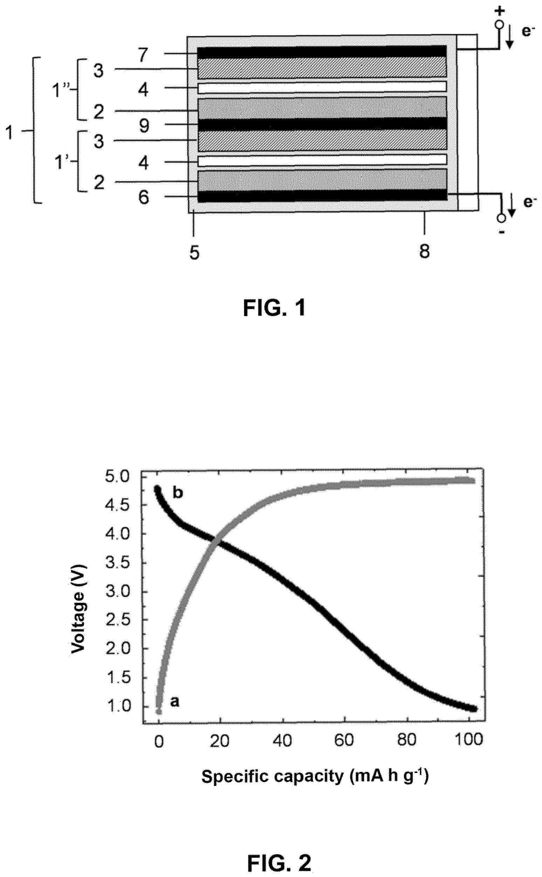

Said battery is capable of producing a voltage up to 200 % higher than that of conventional aluminium batteries thanks to the fact that, in the plurality of stacked electrochemical cells (1), the consecutive cells are connected by a graphite sheet (9) arranged between said consecutive cells (1) (Fig. 1). The thickness of said sheet is preferably comprised between 0.1 and 10 mm. In this way, it is possible to effectively reduce the internal resistance, achieving a higher power density and a greater number of charge and discharge cycles without a rapid deterioration of the energy storage capacity of the battery.

During discharging of said battery; that is, when the battery is connected to an external load through the first (6) and the second (7) current collector, the aluminium sheet that forms the first electrode (2) of each of the electrochemical cells (1) undergoes an oxidation reaction in which aluminium ions are released and move to the second electrode (3) of each of the electrochemical cells through the electrolyte (5), said aluminium ions binding to the carbonaceous material that makes up said second electrodes (3) and generating an electric current that is supplied to the external load through the first current collector (6).

In contrast, during the charging of the battery of the invention by means of the electric current supplied by an external energy source connected to said battery through the first (6) and second (7) current collector, the aluminium ions separate from the carbonaceous material of the second electrode (3) of each of the electrochemical cells to bind once again to the first electrode (2) through the electrolyte (5).

The first electrode (2) comprises a sheet of pure aluminium or, alternatively, a sheet of an aluminium alloy; preferably, an alloy of aluminium and magnesium, aluminium and zinc, aluminium and tin, or aluminium and gallium and, more preferably, with a weight percentage of magnesium, zinc, tin or gallium of less than 5 %. Additionally, said electrode (2) may comprise a hydrophobic and/or anticorrosive coating.

The second electrode (3) may comprise one or more of the following carbonaceous materials: amorphous carbon, graphite, expanded graphite, graphene, graphene oxide, reduced graphene oxide, or expanded graphite or graphene doped with hydrogen, sulphur, nitrogen or potassium. Optionally, said second electrode (3) can be deposited in the form of paint on the graphite sheet (9) by means of a binding additive, preferably, polyvinylidene fluoride (PVDF), polytetrafluoroethylene (PTFE), sodium alginate, carboxymethylcellulose (CMC) or styrene-butadiene rubber (SBR). The weight ratio between the binder additive and the carbonaceous material is equal to or less than 15 %. This configuration allows the internal resistance of the cell to be reduced and, accordingly, to improve the conductivity, power density and voltage of the battery.

In a preferred embodiment of the invention, the second electrode (3) of the cell (1") arranged at the second end of the series of electrochemical cells (1) is deposited in the form of paint on the graphite sheet of the second current collector (7) by means of a binder additive. Preferably, the binder additive comprises polyvinylidene fluoride (PVDF), polytetrafluoroethylene (PTFE), sodium alginate, carboxymethyl cellulose (CMC) or styrene-butadiene rubber (SBR). More preferably, the weight ratio between the binder additive and the carbonaceous material is equal to or less than 15 %. As in the previous embodiment, this configuration reduces the internal resistance of the cell.

The electrolyte (5) comprises a solution of an aluminium halogenide in an ionic liquid. Preferably, the aluminium halogenide comprises aluminium chloride, aluminium bromide or aluminium iodide, while the ionic liquid comprises urea, acetamide, 1-ethyl-3-methylimidazolium chloride, 1-ethyl-3-methylimidazolium bromide or 1-ethyl-3-methylimidazolium iodide. More preferably, the weight ratio between the aluminium halogenide and the ionic liquid is comprised between 1:1 and 3:1.

The separation membrane (4) comprises a porous sheet of ceramic materials, glass microfibres, polypropylene or any possible combination thereof.

The housing (8) comprises polytetrafluoroethylene (PTFE), polyvinyl chloride (PVC), polyethylene terephthalate (PET), or any possible combination thereof.

The use of a battery according to any of the configurations previously described as a button, cylindrical or prismatic battery for stationary applications or as an energy accumulator for electric or hybrid vehicles is also the object of the present invention.

### Exemplary embodiment of the invention

The effectiveness of the battery described in the present invention will be illustrated below by means of an example of a preferred embodiment thereof. Specifically, a rechargeable bipolar aluminium-ion battery has been manufactured that comprises:
- two electrochemical cells (1, 1') stacked in series and connected by a graphite sheet (9) 0.2 mm thick, each of which in turn comprises:
   - a pure aluminium sheet as first electrode (2);
   - expanded graphite deposited in the form of paint on a graphite sheet (9) by means of PVDF as second electrode (3), the binder/carbonaceous material weight ratio being equal to 13.6 %;
   - a porous sheet of glass microfibres as separation membrane (4);
- a solution of aluminium chloride in urea (weight ratio 3:1) as electrolyte (5);
- a graphite sheet as first current collector (6), 0.2 mm thick;
- a graphite sheet as second current collector (6), 0.2 mm thick; and,
- a PET housing (8) that houses the plurality of electrochemical cells (1), the electrolyte (5), the first current collector (6) and the second current collector (7),

Figure 2 shows the galvanostatic charge (a) and discharge (b) curves of this battery, which returns a specific capacity of ~ 100 mA hg⁻¹ under a charge/discharge current density of 50 mA g⁻¹. This represents an increase of up to 200 % over the maximum voltage that known rechargeable aluminium-ion batteries can support (4.8 V vs 2.4 V).

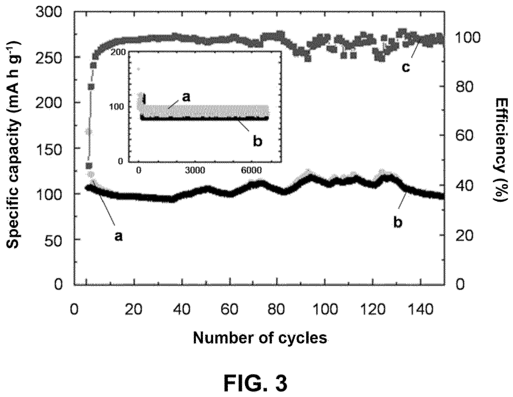

This battery design further allows the cost of energy storage to be reduced (less than €100/kWh), thanks to its low manufacturing and maintenance costs and the fact that it supports a greater number of charge and discharge cycles without degrading than aluminium-ion batteries developed to date. Specifically, and as can be seen in Figure 3, the battery has a stable specific capacity over more than 6000 charge/discharge cycles at 80 % depth of discharge (DOD).

## Claims

1. Rechargeable bipolar aluminium-ion battery comprising:
- a plurality of electrochemical cells (1) stacked in series, each of which in turn comprises:
- a first electrode (2), comprising an aluminium sheet that undergoes an oxidation reaction during battery discharging, and a reduction reaction during battery charging;
- a second electrode (3), comprising a carbonaceous material that undergoes a reduction reaction during battery discharging and an oxidation reaction during battery charging; and,
- a separation membrane (4), arranged as a mechanical spacer between the first (2) and the second (3) electrode but allowing ionic exchange between said electrodes;
- an electrolyte (5), in which the plurality of electrochemical cells (1) are submerged and which transports the ions released in the first electrode (2) and in the second electrode (3) during the charge and discharge cycles of the battery;
- a first current collector (6), comprising a graphite sheet arranged in contact with the first electrode (2) of a cell (1') arranged at a first end of the series of electrochemical cells (1);
- a second current collector (7), comprising a graphite sheet arranged in contact with the second electrode (3) of a cell (1") arranged at a second end of the series of electrochemical cells (1); and,
- a housing (8) that houses the plurality of electrochemical cells (1), the electrolyte (5), the first current collector (6) and the second current collector (7), said battery being **characterised in that,** in the plurality of stacked electrochemical cells (1), the consecutive cells are connected by a graphite sheet (9) arranged between said consecutive cells (1).

2. Battery according to the previous claim, wherein the thickness of the graphite sheet (9) is comprised between 0.1 and 10 mm.

3. Battery according to any of the previous claims, wherein the first electrode (2) comprises a sheet of pure aluminium.

4. Battery according to any of claims 1-2, wherein the first electrode (2) comprises a sheet of an aluminium alloy.

5. Battery according to the previous claim, wherein the aluminium alloy comprises aluminium and magnesium, aluminium and zinc, aluminium and tin, or aluminium and gallium.

6. Battery according to the previous claim, wherein the percentage by weight of magnesium, zinc, tin or gallium in the alloy is less than 5 %.

7. Battery according to any of the previous claims, wherein the first electrode (2) comprises a hydrophobic and/or anticorrosive coating.

8. Battery according to any of the previous claims, wherein the second electrode (3) comprises one or more of the following carbonaceous materials: amorphous carbon, graphite, expanded graphite, graphene, graphene oxide, reduced graphene oxide, or expanded graphite or graphene doped with hydrogen, sulphur, nitrogen or potassium.

9. Battery according to the previous claim, wherein the second electrode (3) is deposited in the form of paint on the graphite sheet (9) by means of a binder additive.

10. Battery according to the previous claim, wherein the second electrode (3) of the cell (1") arranged at the second end of the series of electrochemical cells (1) is deposited in the form of paint on the graphite sheet of the second current collector (7) by means of a binder additive.

11. Battery according to any of claims 9-10, wherein the binder additive comprises polyvinylidene fluoride (PVDF), polytetrafluoroethylene (PTFE), sodium alginate, carboxymethylcellulose (CMC) or styrene-butadiene rubber (SBR).

12. Battery according to any of claims 9-11, wherein the weight ratio between the binder additive and the carbonaceous material is equal to or less than 15 %.

13. Battery according to any of the previous claims, wherein the electrolyte (5) comprises a solution of an aluminium halogenide in an ionic liquid.

14. Battery according to the previous claim, wherein the aluminium halogenide comprises aluminium chloride, aluminium bromide or aluminium iodide.

15. Battery according to any of claims 13-14, wherein the ionic liquid comprises urea, acetamide, 1-ethyl-3-methylimidazolium chloride, 1-ethyl-3-methylimidazolium bromide or 1-ethyl-3-methylimidazolium iodide.

16. Battery according to any of claims 13-15, wherein the weight ratio between the aluminium halogenide and the ionic liquid is between 1:1 and 3:1.

17. Battery according to any of the previous claims, wherein the separation membrane (4) comprises a porous sheet of ceramic materials, glass microfibres, polypropylene, or any possible combination thereof.

18. Battery according to any of the previous claims, wherein the housing (8) comprises polytetrafluoroethylene (PTFE), polyvinyl chloride (PVC), polyethylene terephthalate (PET), or any possible combination thereof.

19. Use of a battery according to any of the previous claims as a button, cylindrical or prismatic battery for stationary applications.

20. Use of a battery according to any of claims 1-18 as an energy accumulator for electric or hybrid vehicles.
